# EUROPEAN PATENT SPECIFICATION

(11) **EP 3 378 815 B1**
(45) Date of publication and mention of the grant of the patent: **10.06.2020**
(21) Application number: 18156004.6
(22) Date of filing: 09.02.2018
(51) Int. Cl.: B65H 63/06, G01B 7/12, G01B 11/10

(54) **YARN WINDING MACHINE**
GARNWICKLUNGSMASCHINE
MACHINE D'ENROULEMENT DE FIL

(30) Priority: 24.03.2017 JP 2017059663
(43) Date of publication of application: 26.09.2018
(73) Proprietor: Murata Machinery, Ltd., Kyoto-shi, Kyoto 601-8326 (JP)
(72) Inventor: Kawamoto, Kenji, Kyoto, 612-8686 (JP)
(74) Representative: Hoffmann Eitle

(56) References cited:
- EP-A1- 2 998 254
- EP-A2- 2 309 042
- FR-A1- 2 466 747

## Description

### BACKGROUND OF THE INVENTION

### 1. Field of the Invention

The present invention relates to a yarn winding machine.

### 2. Description of the Related Art

A yarn winding machine including a yarn supplying device adapted to supply a yarn, a winding device adapted to wind the yarn supplied from the yarn supplying device to form a package, and a yarn monitoring device adapted to monitor a state of the travelling yarn is conventionally known (see e.g., Japanese Laid-Open Patent Publication No. 2014-19541). The yarn monitoring device includes, for example, a sensor adapted to detect the thickness of the yarn, and is adapted to monitor the state of the yarn based on the detection result of the sensor.

In the yarn winding machine, tension is applied to the yarn when winding the yarn. In the yarn, the apparent thickness may change by the tension. The thickness of the yarn detected when passing the sensor changes according to the applied tension.

The yarn monitoring device monitors the state of the yarn based on the thickness of the yarn passing the sensor. Thus, in a conventional yarn monitoring device, even with a yarn having a constant thickness in a tension no-load state, it is measured as a yarn in which the thickness is changed by an influence of fluctuation of the applied tension.

Another example can be seen in document FR 2 466 747 A1.

### BRIEF SUMMARY OF THE INVENTION

According to one aspect of the present invention, it is an object to provide a yarn winding machine capable of enhancing a monitoring accuracy in the yarn monitoring device.

A yarn winding machine according to one aspect of the present invention includes:
a yarn supplying device adapted to hold a spun yarn in a suppliable manner;
a winding device adapted to wind the spun yarn supplied from the yarn supplying device to form a package;
a yarn monitoring device including a sensor adapted to detect a thickness of the spun yarn and adapted to monitor a state of the travelling spun yarn using a detection result of the sensor; and
a control device adapted to correct the measurement value of the thickness of the spun yarn detected by the sensor based on a tension of the spun yarn.

In the yarn winding machine according to one aspect of the present invention, the thickness of the spun yarn detected by the sensor is corrected based on the tension of the spun yarn. Therefore, in the yarn winding machine, the thickness of the spun yarn can be detected with satisfactory accuracy while disregarding a change in thickness of the spun yarn caused by a fluctuation in the tension of the spun yarn. Thus, the state of the spun yarn can be monitored with satisfactory accuracy in the yarn monitoring device adapted to monitor the state of the spun yarn based on the thickness of the spun yarn. As a result, in the yarn winding machine, the monitoring accuracy in the yarn monitoring device can be enhanced.

In one embodiment, the yarn winding machine may include a tension applying device adapted to apply tension to the travelling spun yarn. In this configuration, a package can be satisfactorily formed by applying tension to the spun yarn by the tension applying device. In the configuration in which the tension is applied to the spun yarn by the tension applying device, the tension of the spun yarn may fluctuate. Therefore, in the configuration in which the tension is applied to the spun yarn by the tension applying device, it is particularly effective to correct the thickness of the spun yarn based on the applied tension.

In one embodiment, the control device may correct the measurement value of the thickness of the spun yarn based on the tension applying state by the tension applying device. In this configuration, the thickness of the spun yarn is corrected based on a set value of the tension applied by the tension applying device. Therefore, the thickness of the spun yarn can be stably corrected.

In one embodiment, a tension detecting device adapted to detect the tension of the travelling spun yarn may be further included, where the control device corrects the measurement value of the thickness of the spun yarn based on the detection result of the tension detecting device. In this configuration, the tension of the spun yarn is detected by the tension detecting device, and thus an actual tension of the travelling spun yarn can be detected. Therefore, the thickness of the spun yarn can be corrected with satisfactory accuracy.

In one embodiment, a tension detecting device adapted to detect the tension of the travelling spun yarn may be further included, where the control device corrects the measurement value of the thickness of the spun yarn by the tension applying state by the tension applying device and the detection result of the tension detecting device. In this configuration, the tension applying state and the detection result of the tension is used, and hence the thickness of the spun yarn can be corrected with satisfactory accuracy.

In accordance with the invention, the yarn monitoring device detects a yarn defect of the spun yarn based on the thickness of the spun yarn detected by the sensor, and the control device changes a threshold value related to a determination of a yarn defect detection by the yarn monitoring device based on the tension of the spun yarn. In this configuration, the threshold value related to the determination of the yarn defect detection is changed according to the tension of the spun yarn, and thus the yarn defect can be detected with satisfactory accuracy.

According to one aspect of the present invention, the monitoring accuracy in the yarn monitoring device can be enhanced.

### BRIEF DESCRIPTION OF THE DRAWINGS

FIG. 1 is a front view of an automatic winder according to one embodiment;
FIG. 2 is a side view of a winding unit; and
FIG. 3 is a block diagram illustrating a configuration of a yarn monitoring device.

### DETAILED DESCRIPTION OF PREFERRED EMBODIMENT

Preferred embodiments of the present invention will be hereinafter described in detail with reference to the accompanied drawings. The same or corresponding components are denoted with the same reference numerals in the description of the drawings, and the redundant description will be omitted.

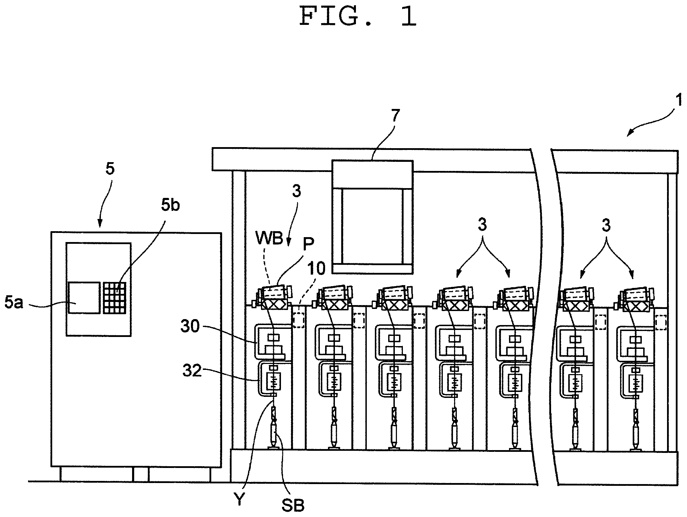

As illustrated in FIG. 1, an automatic winder (yarn winding machine) 1 includes a plurality of yarn winding units 3 arranged in line, a machine control device 5, and a doffing device 7.

The machine control device 5 is adapted to be communicable with each of the plurality of winding units 3. An operator of the automatic winder 1 can appropriately operate the machine control device 5 to collectively manage the plurality of winding units 3. The machine control device 5 includes a display screen 5a and an input key 5b. The display screen 5a is capable of displaying information relating to set contents and/or status, or the like of the winding units 3. An operator can perform a setting operation of the winding units 3 by performing an appropriate operation with the input key 5b.

Each winding unit 3 winds a spun yarn Y around a winding bobbin WB while traversing, while unwinding the spun yarn (yarn) Y from the yarn supplying bobbin SB. The winding unit 3 forms a package P as described above. The spun yarn Y is a yarn in which a natural fiber is twisted. The natural fiber is, for example, seed hair fiber or bast fiber, and is specifically, cotton, flax, and the like. The spun yarn Y does not include reproduced fiber, semisynthetic fiber, and synthetic fiber. The spun yarn Y may include a core yarn. The core yarn is, for example, monofilament yarn, spun yarn, and the like.

When the package P is fully wound (state in which a defined amount of yarn is wound) in each winding unit 3, the doffing device 7 is traveled to a position of the relevant winding unit 3, and removes the fully-wound package and sets an empty winding bobbin WB.

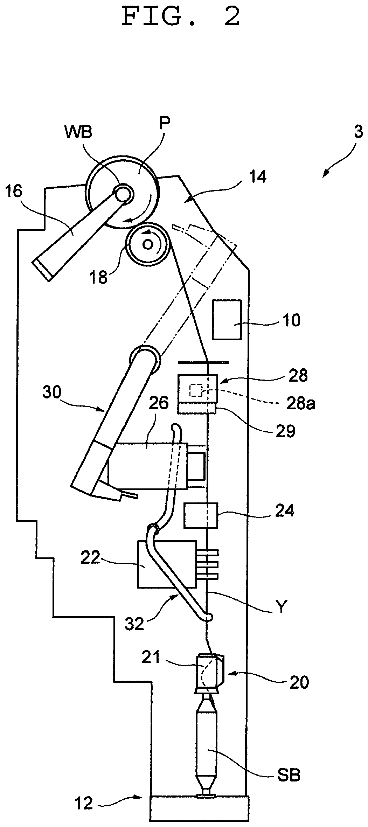

Next, a configuration of the winding unit 3 will be described with reference to FIG. 2. As illustrated in FIG. 2, each winding unit 3 includes a unit control section 10, a yarn supplying device 12, and a winding device 14.

The unit control section 10 includes, for example, a Central Processing Unit (CPU), and a Read Only Memory (ROM). The ROM stores a program for controlling each structure of the winding unit 3. The CPU executes the program stored in the ROM.

The yarn supplying device 12 is a supporting mechanism adapted to support the yarn supplying bobbin SB placed on a conveying tray (not illustrated) at a predetermined position. The spun yarn Y is thereby unwound from the yarn supplying bobbin SB, and the spun yarn Y is pulled out from the yarn supplying bobbin SB. The yarn supplying device 12 thereby supplies the spun yarn Y. The yarn supplying device 12 is not limited to a conveying tray type and, for example, may be a magazine type.

The winding device 14 includes a cradle 16 and a winding drum 18. The cradle 16 includes a pair of rotation supporting sections (not illustrated). The cradle 16 sandwiches the winding bobbin WB with the rotation supporting section to rotatably support the winding bobbin WB (or package P). The cradle 16 can be switched between a state of bringing the supporting package P into contact with the winding drum 18 and a state of moving the package P away from the winding drum 18.

The winding drum 18 traverses the spun yarn Y at a surface of the package P and rotates the package P. The winding drum 18 is rotatably driven by a drum driving motor (not illustrated). The package P is driven and rotated by rotatably driving the winding drum 18 with an outer periphery of the package P making contact with the winding drum 18. A spiral shaped traverse groove is formed on an outer peripheral surface of the winding drum 18. The spun yarn Y unwound from the yarn supplying bobbin SB is wound on the surface of the package P while being traversed at a constant width by the traverse groove. The package P having a constant winding width thus can be formed.

Each winding unit 3 includes an unwinding assisting device 20, a tension applying device 22, a tension detecting device 24, a yarn joining device 26, and a yarn monitoring device 28 arranged in this order from the yarn supplying device 12 on a yarn travelling path between the yarn supplying device 12 and the winding device 14. A first catching and guiding device 30 and a second catching and guiding device 32 are arranged in proximity to the yarn joining device 26.

The unwinding assisting device 20 includes a regulating member 21 that can be placed over the core tube of the yarn supplying bobbin SB. The regulating member 21 has a substantially tubular shape, and is arranged to make contact with a balloon formed at an upper part of a yarn layer of the yarn supplying bobbin SB. The balloon is a portion where the spun yarn Y unwound from the yarn supplying bobbin SB is swung by a centrifugal force. When the regulating member 21 is brought into contact with the balloon, it makes contact with the spun yarn Y of the portion of the balloon thus preventing the spun yarn Y from being excessively swung. The spun yarn Y thus can be appropriately unwound from the yarn supplying bobbin SB.

The tension applying device 22 applies a predetermined tension on the travelling yarn Y. In the present embodiment, the tension applying device 22 is a gate-type tension applying device in which movable comb teeth are arranged with respect to fixed comb teeth. The comb teeth on the movable side are urged so that the comb teeth mesh with each other. The tension applying device 22 applies the tension on the spun yarn Y by causing the spun yarn Y to pass while being bent between the comb teeth in the meshed state. The operation of the tension applying device 22 is controlled by the unit control section 10.

The tension detecting device 24 detects (measures) the tension of the travelling spun yarn Y between the yarn supplying device 12 and the winding device 14. The tension detecting device 24 includes, for example, a load cell (not illustrated). The tension detecting device 24 detects the tension of the spun yarn Y based on an electric signal corresponding to the distortion of the load cell generated by the tension of the spun yarn Y. The tension detecting device 24 outputs a tension measurement signal indicating a measurement value of the tension of the spun yarn Y to the unit control section 10.

The unit control section 10 acquires a set value of the tension to be applied to the spun yarn Y, and controls the operation of the tension applying device 22 based on the set value. The set value of the tension is set, for example, for every lot in the machine control device 5. The unit control section 10 acquires the tension of the spun yarn Y from a detection result of the tension detecting device 24, and controls the operation of the tension applying device 22 so that the tension becomes the set value.

When the spun yarn Y is in a disconnected state for some reason between the yarn supplying device 12 and the winding device 14, the yarn joining device 26 joins the spun yarn Y (lower yarn) from the yarn supplying device 12 and the spun yarn Y (upper yarn) from the winding device 14. In the present embodiment, the yarn joining device 26 is configured as a splicer device adapted to twist yarn ends by a whirling airflow generated by compressed air.

The yarn monitoring device 28 monitors the state of the spun yarn Y travelling on a yarn path, and detects presence/absence of a yarn defect based on the monitored information. The yarn monitoring device 28 detects, for example, a thickness abnormality of the spun yarn Y and/or a foreign substance included in the spun yarn Y, for example, as the yarn defect. Furthermore, the yarn monitoring device 28 also detects yarn breakage, that is, presence/absence of the spun yarn Y in the yarn path, and the like.

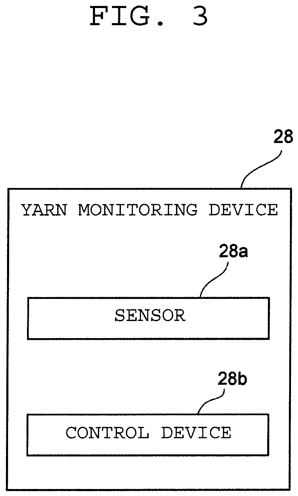

As illustrated in FIG. 3, the yarn monitoring device 28 includes a sensor 28a and a control device 28b. The sensor 28a monitors the spun yarn Y passing a slit formed in the yarn path of the spun yarn Y in the yarn monitoring device 28. The sensor 28a is an optical sensor adapted to irradiate the spun yarn Y with light to detect a temporal change in the thickness of the yarn by the change in the light receiving amount, or a capacitance sensor adapted to pass the spun yarn Y through an electric field to detect a temporal change in the thickness of the yarn by the change in capacitance. The optical sensor includes, for example, a light emitting section such as an LED (Light Emitting Diode), and a light receiving section such as a photodiode. The capacitance sensor includes, for example, a pair of electrodes, and the like that face each other with the spun yarn Y in between. The thickness of the yarn is an index indicating the state of the yarn, but a mass may be adopted as an index instead of the thickness.

The control device 28b detects presence/absence of the yarn defect based on a detection result (measurement value) of the sensor 28a. When detecting the yarn defect, the control device 28b outputs a yarn defect detection signal to the unit control section 10. The control device 28b outputs the detection result by the sensor 28a to the unit control section 10. A cutter 29 adapted to cut the spun yarn Y is arranged in proximity to the yarn monitoring device 28. The cutter 29 is activated by the control device 28b of the yarn monitoring device 28.

The first catching and guiding device 30 catches the upper yarn when the spun yarn Y is in the disconnected state. The first catching and guiding device 30 can be swung (can be moved) from a standby position (solid line in FIG. 2) on the yarn supplying device 12 side to a catching position (chain line in FIG. 2) on the winding device 14 side by a control of the unit control section 10. The first catching and guiding device 30 is connected to a negative pressure source (not illustrated), and generates a suction flow. According to such configuration, the upper yarn sucking and catching section 33 catches the upper yarn at the catching position and returns to the standby position to guide the upper yarn to the yarn joining device 26.

The second catching and guiding device 32 can be swung (can be moved) from a standby position (solid line in FIG. 2) on the yarn supplying device 12 side to a catching position (chain line in FIG. 2) on the winding device 14 side by a control of the unit control section 10. The second catching and guiding device 32 is connected to a negative pressure source (not illustrated), and generates a suction flow. According to such configuration, the second catching and guiding device 32 catches the lower yarn and guides the lower yarn to the yarn joining device 26.

As described above, the winding unit 3 winds the spun yarn Y around the winding bobbin WB to form the package P. In the yarn joining operation by the yarn joining device 26, the spun yarn Y from the winding device 14 is caught by the first catching and guiding device 30, and the spun yarn Y from the yarn supplying device 12 is caught by the second catching and guiding device 32. The spun yarns Y caught by the first catching and guiding device 30 and the second catching and guiding device 32 are guided to the yarn joining device 26. In this case, the spun yarn Y is located in the slit of the yarn monitoring device 28. The yarn joining device 26 carries out the yarn joining operation of the introduced spun yarns Y.

The operation of the control device 28b of the yarn monitoring device 28 will now be described in detail.

The control device 28b corrects the detection result output from the sensor 28a of the yarn monitoring device 28 based on the tension of the spun yarn Y, and calculates the thickness of the spun yarn Y. In the present embodiment, the control device 28b corrects the thickness of the spun yarn Y which is the measurement value of the sensor 28a based on the set value of the tension that can be applied by the tension applying device 22.

The control device 28b includes, for example, a table in which the tension applied to the spun yarn Y and a proportion of change in the thickness of the spun yarn Y by the applied tension (proportion of change in thickness with respect to the set value of the tension) are corresponded for every yarn type of the spun yarn Y. The control device 28b acquires the yarn type of the spun yarn Y from the setting of a lot. The control device 28b acquires the proportion (table) of the change in thickness corresponding to the set value of the tension of the spun yarn Y from the table based on the yarn type of the spun yarn Y, and corrects the measurement value of the thickness of the spun yarn Y output from the sensor 28a according to the proportion. The control device 28b monitors the state of the spun yarn Y based on the correction value. The control device 28b may store the corrected thickness of the spun yarn Y in a storage section. A waveform corresponding to the thickness of the spun yarn Y is output from the sensor 28a, where in the present invention, the magnitude of the waveform may be corrected according to the tension, or the value of the yarn thickness calculated from the waveform may be corrected. That is, the correction of the measurement value of the thickness of the spun yarn Y in the present invention includes both the correction of the magnitude of the waveform output from the sensor 28a and the correction of the value of the thickness calculated from the waveform.

As described above, in the automatic winder 1 according to the present embodiment, the control device 28b of the yarn monitoring device 28 corrects the thickness of the spun yarn Y detected by the sensor 28a based on the tension of the spun yarn Y. Therefore, in the automatic winder 1, the thickness of the spun yarn Y can be detected with satisfactory accuracy regardless of the tension of the spun yarn Y. Thus, the state of the spun yarn Y can be monitored with satisfactory accuracy in the yarn monitoring device 28 adapted to monitor the state of the spun yarn Y based on the thickness of the spun yarn Y. As a result, in the automatic winder 1, the monitoring accuracy in the yarn monitoring device 28 can be enhanced.

In the automatic winder 1 according to the present embodiment, the control device 28b corrects the thickness of the spun yarn Y detected by the sensor 28a based on the tension applied to the spun yarn Y by the tension applying device 22. In this configuration, the thickness of the spun yarn Y is corrected based on the set value of the tension applied by the tension applying device 22. Therefore, the thickness of the spun yarn Y can be stably corrected.

An embodiment of the present invention has been described, but the present invention is not necessarily limited to the above-described embodiment, and various changes can be made within the scope of the invention, as defined by the claims.

In the embodiment described above, a mode in which the yarn winding machine is the automatic winder 1 has been described by way of example. However, the yarn winding machine may be a pneumatic spinning machine, an open end spinning machine, and the like. When the textile machine is the pneumatic spinning machine, the yarn supplying device is a pneumatic spinning device.

In the embodiment described above, a mode for correcting the spun yarn Y in the control device 28b of the yarn monitoring device 28 has been described by way of example. However, the unit control section 10 may correct the thickness of the spun yarn Y.

In the embodiment described above, a mode in which the control device 28b of the yarn monitoring device 28 corrects the thickness of the spun yarn Y based on the set value applied to the spun yarn Y by the tension applying device 22 and the measurement value of the sensor 28a has been described by way of example. However, the control device 28b may correct the thickness of the spun yarn Y based on the measurement value of the tension of the spun yarn Y detected by the tension detecting device 24. Furthermore, the control device 28b may correct the thickness of the spun yarn Y based on the set value applied to the spun yarn Y by the tension applying device 22 and the measurement value of the tension of the spun yarn Y detected by the tension detecting device 24, and the measurement value of the sensor 28a.

In the embodiment described above, a mode in which the winding unit 3 includes the tension detecting device 24 has been described by way of example. However, the yarn monitoring device 28 may include a device adapted to detect the tension of the spun yarn Y.

In the embodiment described above, a mode in which the display screen 5a and the input key 5b are separately configured in the machine control device 5 has been described by way of example. However, for example, in the machine control device 5, a touch panel display device may be used and the display section and the operation section may be configured as the same device.

In the embodiment described above, a mode in which a traverse groove is formed in the winding drum 18 and the spun yarn Y is traversed by the traverse groove has been described by way of example. However, the spun yarn Y may be traversed by an arm type, a belt type, or a rotary type traverse mechanism. In this case, a roller not formed with the traverse groove can be used as an auxiliary roller.

In addition to the embodiment described above, the unit control section 10 may change a threshold value related to the determination of the yarn defect detection by the yarn monitoring device 28 based on the tension of the spun yarn Y. The threshold value related to the determination of the yarn defect detection is, for example, a clearing limit. The clearing limit is configured with a boundary line on whether or not to remove the yarn defect in a two-dimensional field having a length and a thickness of the yarn defect as coordinate axes, respectively. The unit control section 10 changes the boundary line according to the tension of the spun yarn Y. Alternatively, the unit control section 10 may include a plurality of clearing limits for every tension of the spun yarn Y, and may select the clearing limit to use based on the tension of the spun yarn Y.

## Claims

1. A yarn winding machine (1) comprising:
a yarn supplying device (12) adapted to hold a yarn (Y) in a suppliable manner;
a winding device (14) adapted to wind the yarn (Y) supplied from the yarn supplying device (12) to form a package (P);
a yarn monitoring device (28) including a sensor (28a) adapted to detect a thickness of the yarn (Y) and adapted to monitor a state of the travelling yarn (Y) using a detection result of the sensor (28a); and
a control device (28b) adapted to correct the measurement value of the thickness of the yarn (Y) detected by the sensor (28a) based on a tension of the yarn (Y);
**characterized in that** the yarn monitoring device (28) detects a yarn defect of the yarn (Y) based on the thickness of the yarn (Y) detected by the sensor (28a), and the control device (28b) changes a threshold value related to a determination of a yarn defect detection by the yarn monitoring device (28) based on the tension of the yarn (Y) .

2. The yarn winding machine (1) according to claim 1, further **characterized by** comprising a tension applying device (22) adapted to apply tension to the travelling yarn (Y).

3. The yarn winding machine (1) according to claim 2, **characterized in that** the control device (28b) corrects the measurement value of the thickness of the yarn (Y) based on the tension applying state (22) by the tension applying device (22).

4. The yarn winding machine (1) according to claim 1, further **characterized by** comprising a tension detecting device (24) adapted to detect the tension of the travelling yarn (Y);
further **characterized in that** the control device (28b) corrects the measurement value of the thickness of the yarn (Y) based on the detection result of the tension detecting device (24).

5. The yarn winding machine (1) according to claim 3, further **characterized by** comprising a tension detecting device (24) adapted to detect the tension of the travelling yarn (Y);
further **characterized in that** the control device (28b) corrects the measurement value of the thickness of the yarn (Y) by the tension applying state by the tension applying device (22) and the detection result of the tension detecting device (24).

## Patentansprüche

1. Garnwicklungsmaschine (1), umfassend:
eine Garnzuführungsvorrichtung (12), die angepasst ist, um einen Garn (Y) in einer zuführbaren Weise zu halten;
eine Wicklungsvorrichtung (14), die angepasst ist, um den von der Garnzuführungsvorrichtung (12) zugeführten Garn (Y) zu wickeln, um ein Paket (P) zu bilden;
eine Garnüberwachungsvorrichtung (28), die einen Sensor (28a) einschließt, der angepasst ist, um eine Stärke des Garns (Y) zu detektieren, und angepasst, um einen Zustand des wandernden Garns (Y) unter Verwendung eines Detektionsergebnisses des Sensors (28a) zu überwachen;
eine Steuervorrichtung (28b), die angepasst ist, um den Messwert der Stärke des durch den Sensor (28a) detektierten Garns (Y) basierend auf einer Spannung des Garns (Y) zu korrigieren;
**dadurch gekennzeichnet, dass** die Garnüberwachungsvorrichtung (28) einen Garnfehler des Garns (Y) basierend auf der durch den Sensor (28a) detektierten Stärke des Garns (Y) detektiert, und die Steuervorrichtung (28b) einen Schwellenwert bezüglich einer Bestimmung einer Garnfehlerdetektion durch die Garnüberwachungsvorrichtung (28) basierend auf der Spannung des Garns (Y) ändert.

2. Garnwicklungsmaschine (1) nach Anspruch 1, weiter **gekennzeichnet durch** Umfassen einer Spannungsanlegungsvorrichtung (22), die angepasst ist, um Spannung an den wanderden Garn (Y) anzulegen.

3. Garnwicklungsmaschine (1) nach Anspruch 2, **dadurch gekennzeichnet, dass** die Steuervorrichtung (28b) den Messwert der Stärke des Garns (Y) basierend auf dem Spannungsanlegungszustand (22) durch die Spannungsanlegungsvorrichtung (22) korrigiert.

4. Garnwicklungsmaschine (1) nach Anspruch 1, weiter **gekennzeichnet durch** Umfassen einer Spannungsdetektionsvorrichtung (24), die angepasst ist, um die Spannung des wandernden Garns (Y) zu detektieren;
weiter **dadurch gekennzeichnet, dass** die Steuervorrichtung (28b) den Messwert der Stärke des Garns (Y) basierend auf dem Detektionsergebnis der Spannungsdetektionsvorrichtung (24) korrigiert.

5. Garnwicklungsmaschine (1) nach Anspruch 3, weiter **gekennzeichnet durch** Umfassen einer Spannungsdetektionsvorrichtung (24), die angepasst ist, um die Spannung des wandernden Garns (Y) zu detektieren;
weiter **dadurch gekennzeichnet, dass** die Steuervorrichtung (28b) den Messwert der Stärke des Garns (Y) durch den Spannungsanlegungszustand durch die Spannungsanlegungsvorrichtung (22) und das Detektionsergebnis der Spannungsdetektionsvorrichtung (24) korrigiert.

## Revendications

1. Machine d'enroulement de fil (1) comprenant :
un dispositif d'alimentation en fil (12) adapté pour maintenir un fil (Y) d'une manière à pouvoir être alimenté ;
un dispositif d'enroulement (14) adapté pour enrouler le fil (Y) alimenté à partir du dispositif d'alimentation en fil (12) pour former un emballage (P) ;
un dispositif de surveillance de fil (28) incluant un capteur (28a) adapté pour détecter une épaisseur du fil (Y) et adapté pour surveiller un état du fil en mouvement (Y) en utilisant un résultat de détection du capteur (28a) ; et
un dispositif de commande (28b) adapté pour corriger la valeur mesurée de l'épaisseur du fil (Y) détectée par le capteur (28a) sur la base d'une tension du fil (Y) ;
**caractérisée en ce que** le dispositif de surveillance de fil (28) détecte un défaut de fil du fil (Y) sur la base de l'épaisseur du fil (Y) détectée par le capteur (28a), et le dispositif de commande (28b) modifie une valeur de seuil liée à une détermination d'une détection de défaut de fil par le dispositif de surveillance de fil (28) sur la base de la tension du fil (Y).

2. Machine d'enroulement de fil (1) selon la revendication 1, **caractérisée en outre en ce qu'**elle comprend un dispositif d'application de tension (22) adapté pour appliquer une tension sur le fil (Y) en mouvement.

3. Machine d'enroulement de fil (1) selon la revendication 2, **caractérisé en ce que** le dispositif de commande (28b) corrige la valeur mesurée de l'épaisseur du fil (Y) sur la base de l'état d'application de tension (22) par le dispositif d'application de tension (22).

4. Machine d'enroulement de fil (1) selon la revendication 1, **caractérisée en outre en ce qu'**elle comprend un dispositif de détection de tension (24) adapté pour détecter la tension du fil (Y) en mouvement ;
**caractérisée en outre en ce que** le dispositif de commande (28b) corrige la valeur mesurée de l'épaisseur du fil (Y) sur la base du résultat de détection du dispositif de détection de tension (24).

5. Machine d'enroulement de fil (1) selon la revendication 3, **caractérisée en outre en ce qu'**elle comprend un dispositif de détection de tension (24) adapté pour détecter la tension du fil (Y) en mouvement ;
**caractérisée en outre en ce que** le dispositif de commande (28b) corrige la valeur mesurée de l'épaisseur du fil (Y) par l'état d'application de tension par le dispositif d'application de tension (22) et le résultat de détection du dispositif de détection de tension (24).
